# EUROPEAN PATENT APPLICATION

(11) **EP 4 572 523 A1**
(43) Date of publication of application: **18.06.2025**
(21) Application number: 23851765.0
(22) Date of filing: 07.08.2023
(51) Int. Cl.: H04W 76/27

(54) **METHOD EXECUTED BY USER EQUIPMENT FOR PROCESSING PAGING MESSAGE, AND USER EQUIPMENT**

(30) Priority: 08.08.2022 CN 202210946584
(71) Applicant: Sharp Kabushiki Kaisha, Sakai City, Osaka 590-8522 (JP)
(72) Inventor: XIAO, Fangying, Pudong, Shanghai 201206 (CN); LIU, Renmao, Pudong, Shanghai 201206 (CN)
(74) Representative: Müller Hoffmann & Partner
(86) International application number: PCT/CN2023/111440
(87) International publication number: WO 2024/032544

(57) **Abstract**

The present invention provides a paging message processing method performed by user equipment not in an RRC connected state, the user equipment being capable of receiving an MBS multicast session in an RRC inactive state, including: monitoring a paging message, the paging message comprising at least one temporary mobile group identity (TMGI) identifying an MBS multicast session; and if the user equipment is in the RRC inactive state, when no MBS multicast session not configured to be received in the RRC inactive state is present among MBS multicast sessions that the user equipment has joined among the MBS multicast sessions indicated by the TMGIs in the detected paging message, skipping performing an RRC connection resumption operation.

## Description

### TECHNICAL FIELD

The present invention relates to the technical field of wireless communications. More specifically, the present invention relates to a paging message processing method performed by user equipment, and user equipment.

### BACKGROUND ART

A study item (SI) on architectural enhancements for 5G multicast-broadcast services (see SP-190625 for details) has been approved. One objective (referred to as Objective A) of this SI is to support general-purpose MBS services in 5GS, and use cases that can benefit from these characteristics include (but are not limited to) public safety, V2X applications, transparent IPv4/IPv6 multicast delivery, IPTV, wireless software delivery, group communications, Internet of Things applications, etc. Correspondingly, at the 3rd Generation Partnership Project (3GPP) RAN#86 plenary meeting, an NR multicast and broadcast service (NR MBS) work item was proposed (see Non-Patent Document: RP-193248: New WID: NR Multicast and Broadcast Service), and was approved. This work item aims to provide the support in the RAN for Objective A. The objective of the work item has been achieved. For detailed description of the related schemes, reference may be made to related technical documents of 3GPP Release 17, such as TS38.300-h10, TS38.331-h10, TS38.321-h10, etc. At the 3GPP RAN#94 plenary meeting, a work item named enhanced NR broadcast/multicast (see Non-Patent Document: RP-213568: New WID: Enhancements of NR Multicast and Broadcast Services) was approved, aiming to further enhance the MBS broadcast/multicast of Release 17. One of the objectives of the work item is to enable user equipment in the RRC inactive state to receive a multicast service.

The present invention discusses related issues involved in enabling user equipment in the RRC inactive state to receive a multicast service in the RAN.

### SUMMARY OF THE INVENTION

An objective of the present invention is to provide a paging message processing method performed by user equipment and capable of reducing power consumption, and user equipment.

According to an aspect of the present invention, provided is a paging message processing method performed by user equipment not in an RRC connected state, the user equipment being capable of receiving an MBS multicast session in an RRC inactive state, comprising: monitoring a paging message, the paging message comprising at least one temporary mobile group identity (TMGI) identifying an MBS multicast session; and if the user equipment is in the RRC inactive state, when no MBS multicast session not configured to be received in the RRC inactive state is present among MBS multicast sessions that the user equipment has joined among the MBS multicast sessions indicated by the TMGIs in the detected paging message, skipping performing an RRC connection resumption operation.

### Effect of Invention

According to the present invention, it is possible to prevent UE from unnecessarily initiating an RRC connection resumption procedure, thereby avoiding unnecessary signaling overhead.

### BRIEF DESCRIPTION OF THE DRAWINGS

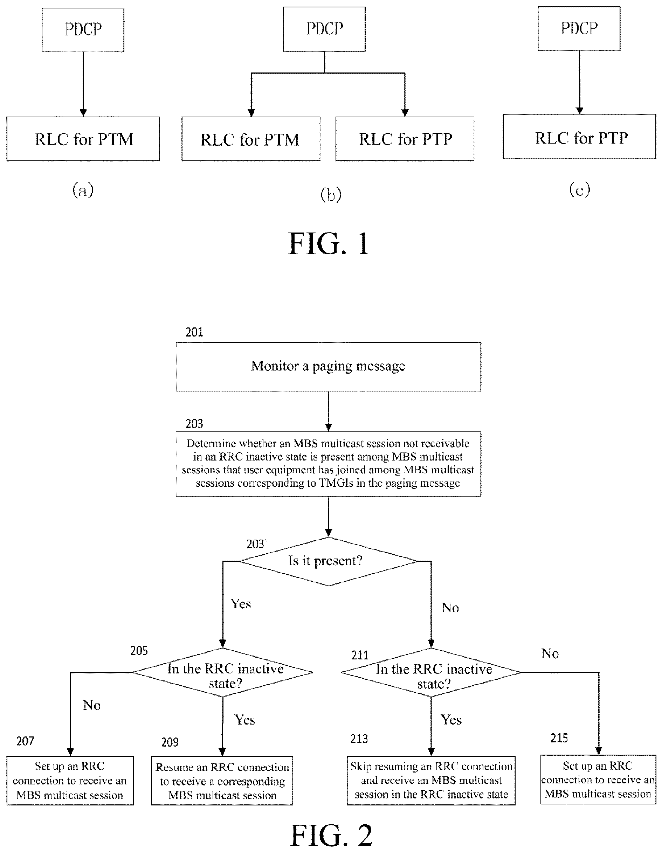

The above and other features of the present invention will be more apparent from the following detailed description in combination with the accompanying drawings, in which:
(a) to (c) of FIG. 1 are schematic diagrams showing specific configurations of a radio bearer for receiving an MBS service according to the present invention.
FIG. 2 shows a flowchart of a paging message processing method according to an embodiment of the present invention.
FIG. 3 shows a flowchart of an example of a monitoring procedure in a paging message processing method according to an embodiment of the present invention.
FIG. 4 shows a flowchart of a method of configuring an MBS multicast session received in an RRC inactive state according to an embodiment of the present invention.
FIG. 5 is a simplified block diagram of user equipment according to an embodiment of the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP related documents, for example TS38.300, TS38.321, TS38.323, TS38.331, etc. In addition, embodiments of the present invention are not limited to broadcast/multicast services, and may also be applied to other application scenarios.

UE: User Equipment.

RRC: Radio Resource Control.

RRC_CONNECTED: RRC connected state.

RRC_INACTIVE: RRC inactive state.

RRC_IDLE: RRC idle state.

RAN: Radio Access Network.

NR: New RAT, New Radio Access Technology.

MBS: Multicast/Broadcast Services.

PDCP: Packet Data Convergence Protocol.

RLC: Radio Link Control.

SDU: Service Data Unit. A data packet received by the present layer from an upper layer or submitted by the present layer to an upper layer is referred to as an SDU.

PDU: Protocol Data Unit. A data packet received by the present layer from a lower layer or submitted by the present layer to a lower layer is referred to as a PDU. For example, a PDCP data PDU is a data packet obtained after a PDCP header is added to a PDCP SDU.

RB: Radio Bearer.

MRB: an MBS radio bearer, i.e., a radio bearer that is configured for MBS delivery.

TMGI: Temporary Mobile Group Identity, for identifying an MBS session.

RNTI: Radio Network Temporary Identifier.

PTM: Point to Multipoint, an MBS service delivery means. In a PTM delivery means, a base station (gNB) delivers a single copy of MBS data packets to a set of UEs. For example, the base station uses a group common physical downlink control channel (PDCCH) scrambled by a G-RNTI to schedule a group common physical downlink shared channel (PDSCH) scrambled by the same G-RNTI.

PTP: Point to Point, an MBS service delivery means. In a PTP delivery means, a RAN node (gNB) individually delivers separate copies of MBS data packets to individual UEs independently. That is, the base station uses a UE-specific PDCCH scrambled by a UE-specific RNTI to schedule a UE-specific PDSCH scrambled by the same UE-specific RNTI.

G-RNTI: Group RNTI, used to scramble the scheduling and transmission of PTM for one or more MBS multicast services.

In the present invention, a network, a base station, and a RAN may be used interchangeably. The network may be a Long Term Evolution (LTE) network, an NR network, an enhanced Long Term Evolution (eLTE) network, or another network defined in a subsequent evolved version of the 3GPP.

Currently, NR MBS services include MBS broadcast (or an MBS broadcast session) and MBS multicast (or an MBS multicast session). The MBS broadcast provides a downlink-only MBS transmission mode for a service with low quality of service (QoS), so that UE in an RRC connected state, an RRC idle state, or an RRC inactive state can receive the MBS service, and the UE receives an MBS configuration of the MBS broadcast via a broadcast control channel MCCH. MBS multicast requires that UE sets up an RRC connection to a base station, and then the base station performs configuration for the UE via dedicated RRC signaling (also referred to as an RRC message). Radio bearers (MRBs) for receiving these MBS services (or MBS multicast sessions) may also be configured for the UE by the base station via dedicated RRC signaling (e.g., an RRC reconfiguration message). Only UE that is in the RRC connected state and is configured with the MRB can receive a corresponding MBS service. MBS sessions include an MBS broadcast session and an MBS multicast session. Unless otherwise specified, the MBS session is an MBS multicast session in the embodiments of the present disclosure.

(a) to (c) of FIG. 1 are schematic diagrams showing specific configurations of a radio bearer for receiving MBS multicast. The radio bearer may be an MRB configured with only PTM transmission (as shown in (a) of FIG. 1), or a split MRB configured with both PTM and PTP (as shown in (b) of FIG. 1), or an MRB configured with only PTP transmission (as shown in (c) of FIG. 1). It should be noted that (a) to (c) of FIG. 1 show only a PDCP entity and an RLC entity corresponding to a bear and a relationship therebetween. In the downlink direction, a PDCP PDU encapsulated by the PDCP entity is submitted to the RLC entity.

In an existing NR MBS, when an MBS multicast session is activated by a core network or a base station has MBS multicast session data to be sent, a network supporting the MBS notifies UE in the RRC idle state or the RRC inactive state via a group notification mechanism. Upon receiving the group notification, the UE is reconnected to the network to receive the corresponding MBS multicast session. The group notification is addressed with a P-RNTI on a physical downlink control channel (PDCCH), and the UE monitors a paging channel. A paging message for the group notification includes an MBS session identity TMGI and is used to page all UEs that have joined the relevant MBS multicast session and are in the RRC idle state or the RRC inactive state. In other words, the UEs are not individually paged.

The network initiates a paging procedure by transmitting a paging message in a paging occasion of the UE. One paging message may address a plurality of UEs. The paging message may include a pagingRecordList field (indicating a list of identities of paged UEs) including pagingRecord fields (indicating the identities of the paged UEs) related to the UEs, and include a pagingGroupList field (indicating a list of identities of MBS multicast sessions) of one or more TMGIs to page the UEs for a specific MBS multicast session. The pagingRecord field includes a user identity ue-Identity field, and may further include an accessType field for indicating whether the paging message is generated by a non-3gpp access PDU session. The value of the ue-Identity field may be an ng-5G-S-TMSI or a fullI-RNTI, wherein the ng-5G-S-TMSI includes a 5G-S-TMSI (5G S-Temporary Mobile Subscription Identity) which is a temporary UE identity provided by a 5GC (a 5G core network) to uniquely identify the UE (the terminal) within a tracking area. The fullI-RNTI is allocated to the UE by the base station in an RRCRelease message for suspending an RRC connection.

Upon receiving a paging message from the network, the UE performs at least one of the following operations:
I. If the UE is in the RRC inactive state, and ue-Identity included in the PagingRecord field included in the paging message matches the fullI-RNTI stored in the UE, initiating an RRC connection resumption procedure; and if ue-Identity included in the PagingRecord field included in the paging message matches the UE identity (i.e., the 5G-S-TMSI) allocated (or indicated) by an upper layer (e.g., a NAS layer), forwarding ue-Identity and accessType (if present) to the upper layer, and performing, by the UE, an operation of entering the RRC idle state. The operation includes at least: resetting a medium access control (MAC) entity, deleting a UE inactive access stratum (AS) context (if present), and indicating, to the upper layer, release of an RRC connection and a release cause.
II. For each TMGI included in the PagingGroupList field of the paging message, if the UE has joined the MBS session indicated by the TMGI, forwarding the TMGI to the upper layer. For the UE in the RRC idle state, upon receiving the TMGI, the upper layer may determine whether to trigger setup of an RRC connection. For the UE in the RRC inactive state, upon receiving the TMGI, the upper layer may prepare to receive the corresponding MBS session.
III. If the UE is in the RRC inactive state and the UE has joined one or more MB S sessions indicated by the TMGIs included in the PagingGroupList field in the paging message and no ue_Identity included in the PagingRecord field in the paging message matches the UE identity allocated by the upper layer, initiating an RRC connection resumption procedure.

It should be noted that the purpose of the RRC connection resumption procedure is to resume a suspended RRC connection, including resuming an SRB, a DRB, and a multicast MRB or performing a RAN-based notification area RNA update, etc.

The 3GPP has enabled UE in the RRC inactive state to receive an MBS multicast session. For UE configured to be capable of receiving an MBS multicast session in the RRC inactive state, when a received paging message includes a session identity corresponding to an MBS multicast session, which operations are to be performed to correctly receive the corresponding MBS session and/or to avoid unnecessary signaling overhead or resource waste is a problem to be solved.

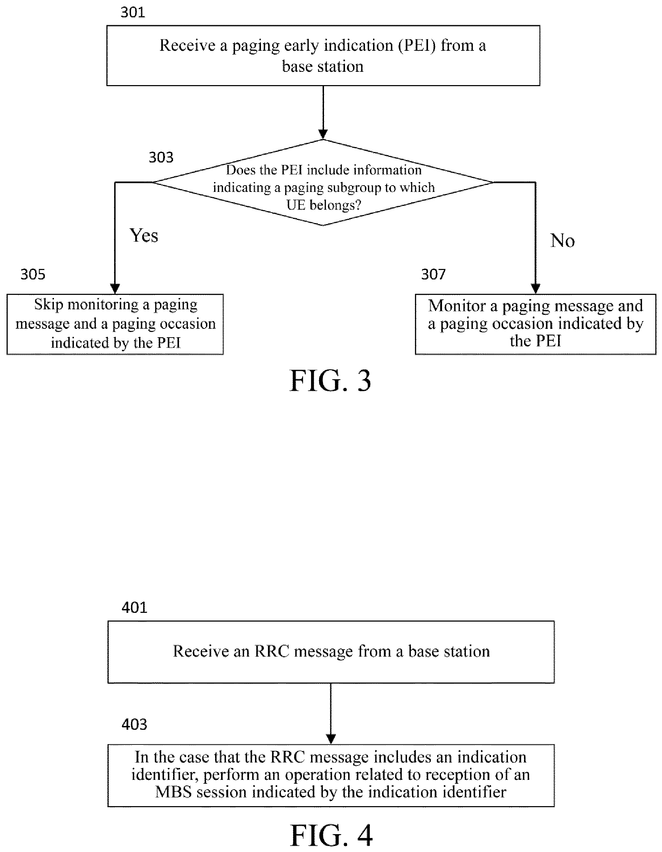

An overview of embodiments of the present invention will be described below with reference to FIG. 2 and FIG. 3. FIG. 2 and FIG. 3 show procedures performed by user equipment not in the RRC connected state.

FIG. 2 shows a flowchart of a paging message processing method according to an embodiment of the present invention.

As shown in FIG. 2, in 201, user equipment monitors a paging message, and the paging message includes at least one temporary mobile group identity (TMGI) identifying an MBS multicast session.

In 203 and 203', whether an MBS multicast session not receivable in an RRC inactive state is present among MBS multicast sessions that the user equipment has joined among the MBS multicast sessions corresponding to the TMGIs in the paging message is determined.

If an MBS multicast session not receivable in the RRC inactive state is present among the MBS multicast sessions that the user equipment has joined among the MBS multicast sessions corresponding to the TMGIs in the paging message, in 205, whether the user equipment is in the RRC inactive state is determined.

If the user equipment is in the RRC inactive state, in 207, an RRC connection is resumed on the basis of RRC connection context information stored by the user equipment to receive the corresponding MBS multicast session. If the user equipment is not in the RRC inactive state, it is indicated that the user equipment is in an RRC idle state, and in this case, in 207, an RRC connection is set up to receive the MBS multicast session.

In another aspect, if no MBS multicast session not receivable in the RRC inactive state is present among the MBS multicast sessions that the user equipment has joined among the MBS multicast sessions corresponding to the TMGIs in the paging message, in 211, whether the user equipment is in the RRC inactive state is determined.

If the user is in the RRC inactive state, in 213, an RRC connection is not resumed, and the MBS multicast session is received in the RRC inactive state. In this case, an RRC layer of the user equipment may instruct a lower layer of the RRC layer to receive the corresponding MBS multicast session.

If the user is not in the RRC inactive state, it is indicated that the user equipment is in the RRC idle state, and in this case, in 207, an RRC connection is set up to receive the MBS multicast session.

Thus, when the user equipment is in the RRC inactive state, and no MBS multicast session not configured to be received in the RRC inactive state is present among MBS multicast sessions that the user equipment has joined among the MBS multicast sessions indicated by the TMGIs in the detected paging message, an RRC connection resumption operation is not performed, thereby avoiding resumption or setup of an RRC connection.

Further, for each TMGI in the detected paging message, in the case that the MBS multicast session indicated by the TMGI is not configured to be received in the RRC inactive state, the RRC layer of the user equipment may forward the TMGI to an upper layer of the RRC layer, so that the upper layer is prepared to process the MBS session.

As another example, if the user equipment is in the RRC idle state, for each TMGI in the detected paging message, the RRC layer of the user equipment may forward the TMGI to the upper layer of the RRC layer, and the upper layer may thereby trigger the RRC layer to set up an RRC connection.

In addition, even if the detected paging message does not include a user identity of the user equipment allocated by the upper layer or a specific identity stored in the UE, if the paging message includes a TMGI of an MBS multicast session that the user equipment has joined, the user equipment may also resume an RRC connection to receive the corresponding MBS multicast session.

Specifically, as an example, if the user equipment is in the RRC inactive state, for each TMGI in the detected paging message, in the case that the following first condition is satisfied, the RRC connection is resumed on the basis of the RRC connection context information stored by the user equipment: an MBS multicast session that the user equipment has joined is present among the MBS multicast sessions indicated by the TMGIs, and the MBS multicast session is not configured to be received in the RRC inactive state; and none of user equipment identities in the paging message matches a user equipment identity specified by the upper layer of the RRC layer of the user equipment.

In addition, the first condition may further include: none of user equipment identities in the paging message matches a specific identity stored in the UE, the specific identity is carried in an RRC release message and transmitted to the user equipment, and the RRC release message is transmitted to the user equipment by a base station to instruct the user equipment to release the RRC connection.

If there is a user identity in the paging message that matches the user equipment identity specified by the upper layer of the RRC layer of the user equipment, it is indicated that the paging procedure is initiated by a core network, and if there is a user identity in the paging message that matches the specific identity stored by the user equipment, it is indicated that the paging procedure is initiated by the base station. In another aspect, in the case that none of user equipment identities in the paging message matches the specific identity stored in the UE and matches the user identity indicated by the upper layer of the user equipment, it is indicated that the paging message does not page the user equipment due to a non-MBS service.

As another example, if the user equipment is in the RRC inactive state, for each TMGI in the detected paging message, in the case that the MBS multicast session indicated by the TMGI is an MBS multicast session that the user equipment has joined and the MBS multicast session is not configured to be received in the RRC inactive state, the RRC layer forwards the TMGI to the upper layer of the RRC layer.

FIG. 3 shows a flowchart of an example of a monitoring procedure in a paging message processing method according to an embodiment of the present invention. The procedure of FIG. 3 is performed before performing a monitoring operation with respect to a paging message. In the example shown in FIG. 3, MBS multicast sessions indicated by TMGIs in a paging message are all configured to be receivable in the RRC inactive state.

As shown in FIG. 3, in 301, user equipment receives a paging early indication (PEI) from a base station, and the PEI includes paging subgroup information of paged user equipment.

Then, in 303, whether the PEI includes information indicating a paging subgroup to which the user equipment belongs is determined.

In the case that the paging subgroup information in the PEI does not include the information indicating the paging subgroup to which the user equipment belongs, in 305, monitoring of the paging message and a paging occasion indicated by the PEI is skipped.

In the case that the paging subgroup information in the PEI includes the information indicating the paging subgroup to which the user equipment belongs, monitoring of the paging message the paging occasion indicated by the PEI is performed.

By means of the example shown in FIG. 3, power consumption can be further reduced.

The above descriptions made with reference to FIG. 2 and FIG. 3 are merely examples of the present invention, and the order of the procedures may be changed within the scope of the present invention. For example, the operation of determining whether the user equipment is in the RRC inactive state in FIG. 2 may also be performed before the step of determining whether an MBS multicast session not receivable in an RRC inactive state is present among MBS multicast sessions that the user equipment has joined among the MBS multicast sessions corresponding to the TMGIs in the paging message.

The following provides embodiments to solve the above problem.

For a TMGI included in a received paging message, if UE has joined an MBS session indicated by the TMGI but the MBS session indicated by the TMGI is not an MBS session to be received by the UE in the RRC inactive state, an RRC connection resumption procedure is performed. Optionally, if the UE has joined the MBS session indicated by the TMGI and the MBS session indicated by the TMGI is an MBS session to be received by the UE in the RRC inactive state, indication information is sent to a lower layer to trigger the lower layer to receive the corresponding MBS session.

In other words, for a TMGI included in a received paging message, if the UE has joined an MBS session indicated by the TMGI and the MBS session indicated by the TMGI is an MBS session to be received by the UE in the RRC inactive state, no RRC connection resumption procedure is performed.

The detailed description is as follows:
Upon receiving a paging message from the network, the UE performs at least one of the following operations:
A. If the UE is in the RRC inactive state, and ue-Identity included in the PagingRecord field included in the paging message matches the fullI-RNTI stored by the UE, initiating an RRC connection resumption procedure; and if ue-Identity included in the PagingRecord field included in the paging message matches the UE identity (i.e., the 5G-S-TMSI) allocated (or indicated) by an upper layer (e.g., a NAS layer), forwarding ue-Identity and accessType (if present) to the upper layer, and performing, by the UE, an operation of entering the RRC idle state. The operation includes at least: resetting a medium access control (MAC) entity, deleting a UE inactive access stratum (AS) context (if present), and indicating, to the upper layer, release of an RRC connection and a release cause.
B. For each TMGI included in the paging message, if the UE has joined the MBS session indicated by the TMGI and the MBS session indicated by the TMGI is not an MBS session to be received by the UE in the RRC inactive state, forwarding the TMGI to the upper layer (e.g., the NAS layer). Alternatively, for each TMGI included in the paging message, if the UE is in the RRC idle state (or the UE is not in the RRC inactive state), the TMGI is forwarded to the upper layer (e.g., the NAS layer).
C. If the UE is in the RRC inactive state, the UE has joined one or more MBS sessions indicated by the TMGIs included in the PagingGroupList field (or the PagingRecord field) in the paging message, the MBS session indicated by each TMGI is not an MBS session to be received by the UE in the RRC inactive state, and no ue_Identity included in the PagingRecord field in the paging message matches the UE identity allocated by the upper layer, and if no ue_Identity included in the PagingRecord field in the paging message matches the fullI-RNTI stored in the UE (this condition is optional), initiating an RRC connection resumption procedure. The fullI-RNTI is an identity allocated by the base station to the UE. If the UE stores the identity, it is indicated that the UE has set up a connection with the base station, and the UE stores context information of the RRC connection between the UE and the base station. Accordingly, the RRC connection can be resumed on the basis of the context information.
D. If the UE is in the RRC inactive state, the UE has joined one or more MBS sessions indicated by the TMGIs included in the PagingGroupList field in the paging message, and the MBS session indicated by each TMGI is an MBS session to be received by the UE in the RRC inactive state, performing at least one of the following operations: (1) indicating the TMGI (or a corresponding G-RNTI or G-CS-RNTI) to a lower layer (e.g., the medium access control (MAC) layer); (2) indicating, to the lower layer, that the corresponding MBS session has started; and (3) instructing or triggering the lower layer to receive the corresponding MBS session.

By means of the above embodiment, when all MBS sessions that UE has joined among MBS sessions corresponding to all TMGIs included in the PagingGroupList field in a paging message received by the UE are MBS sessions to be received by the UE in the RRC inactive state, the UE does not initiate an RRC connection resumption procedure, thereby avoiding unnecessary signaling overhead.

In addition, for the purpose of power saving, for an MBS session receivable by UE in the RRC inactive state, when a base station stops data transmission of the MBS session, the base station may send indication information to the UE to indicate, to the UE, stopping of the MBS session or to instruct the UE to stop receiving the MBS session, so as to reduce power consumption of the UE. The indication information may be carried in downlink control information (DCI) or in a medium access control control element (MAC CE). The DCI or the MAC CE may include the TMGI or the G-RNTI or the MRB identity corresponding to the MBS session. Alternatively, the value of a corresponding bit in the DCI may be set to indicate stopping of the MBS session corresponding to the G-RNTI used to scramble a PDCCH corresponding to the DCI. Optionally, upon receiving the indication information, the UE suspends the corresponding MRB, or upon receiving the indication information, the MAC layer or the physical layer provides an indication to the upper layer (e.g., the RRC layer), and upon receiving the indication from the lower layer (e.g., the MAC layer or the physical layer), the upper layer (e.g., the RRC layer) suspends the corresponding MRB.

For UE in the RRC idle state and the RRC inactive state, in order to reduce power consumption of the UE, a discontinuous reception mechanism DRX and extended discontinuous reception (eDRX) are defined for paging monitoring and reception. The UE monitors a paging occasion (PO) in each DRX cycle. One PO is a set of a series of PDCCH monitoring occasions, and may include a plurality of time slots. Paging DCI may be sent by the network to the UE in the PO. The eDRX may be used for RRC_IDLE and RRC_INACTIVE. An eDRX cycle may be longer than the DRX cycle, thereby reducing more power consumption than DRX.

In order to further reduce power consumption of the UE, the UE in RRC_IDLE and RRC_INACTIVE may receive a paging early indication (PEI) before a paging occasion, so as to determine whether to monitor the paging occasion or not, and if not, monitoring of the paging occasion may be skipped, and the paging message may not be received. For example, when there is paging information in the network that needs to be received by the terminal, the network transmits PEI indication information used to indicate that the terminal needs to monitor a PO associated with the indication information. The terminal is woken up before the PO, performs time-frequency synchronization, and monitors a paging PDCCH and performs possible PDSCH reception on the determined PO. If it is indicated in the indication information received by the terminal that the terminal does not need to monitor the PO associated with the indication information, the terminal does not need to perform monitoring on the associated PO, and does not need be woken up and receive an SSB to perform time-frequency synchronization before the PO to prepare for the possible PDSCH reception. In this way, the terminal can avoid, via the indication of the network, unnecessary actions such as waking up, synchronization, etc., thereby reducing power consumption of the terminal. The PEI may include paging subgroup information of the UE. After receiving the PEI, the UE can know whether a paging subgroup to which the UE belongs is to be paged, and if not, the UE may skip monitoring the PO indicated by the PEI, thereby avoiding reception of unnecessary paging DCI and paging message. If the PEI indicates that the paging subgroup to which the UE belongs is paged, the UE needs to monitor the PO indicated by the PEI. One PEI may be associated with a plurality of POs and one PEI may also be associated with a plurality of PFs.

For the UE in the RRC inactive state, if all MBS sessions that the UE has joined are MBS sessions received in the RRC inactive state or are MBS sessions configured to be receivable in the RRC inactive state, paging may be monitored in the PEI manner. That is, the UE receives the PEI first, and determines, according to the indication information of the PEI, whether to monitor the paging occasion or not.

If one or more MBS sessions that the UE has joined are MBS sessions that cannot be received in the RRC inactive state or are not configured to be receivable in the RRC inactive state, the PEI is ignored, and monitoring of each PO corresponding to the UE is performed.

### UE capability report

UE receives, from a base station, a UE capability request message UECapabilityEnquiry used to request a UE radio access capability.

The UE transmits, to the base station, a UECapabolityInformation message used to indicate UE capability information. Specifically, if the UECapabilityEnquiry message includes a field ptmInInactiveRequest used to inquire whether the UE supports reception of an MBS multicast session in the RRC inactive state, and if the UE supports reception of an MBS multicast session in the RRC inactive state, a UEptmInInactive field used to indicate that the UE supports reception of an MBS multicast session in the RRC inactive state is included in the UECapabolityInformation message, and the value thereof is set to a corresponding value, e.g., "true".

### Configuration of MBS Session received in RRC inactive state

In the above embodiment, the MBS session received by the UE in the RRC inactive state may be configured for the UE by the base station via an RRC message. The following embodiments describe how a base station configures, for UE, an MBS session received in the RRC inactive state.

An RRC reconfiguration message is a command used to modify an RRC connection, and an RRC release message is used to command release of an RRC connection or suspension of an RRC connection. If the RRC release message includes a field suspendConfig that indicates the configuration of the RRC inactive state, the UE suspends the RRC connection according to the configuration in the field, or otherwise the UE releases the RRC connection. How to configure PTM for UE in the RRC inactive state is discussed in the following embodiments, so that the case where the RRC release message includes the suspendConfig field is considered in all the following embodiments. Further, unless otherwise specified, any indication identifier used to indicate an MBS session to be received after UE enters the RRC inactive state can be included in the suspendConfig field.

In view of the above problems, the present disclosure provides the following embodiments.

In step 401, user equipment (UE) receives an RRC message from a base station, and the RRC message includes an indication identifier used to indicate an MBS session to be received after the UE enters an RRC inactive state.

In step 403, on the basis of the received RRC message, the user equipment (UE) performs an operation related to reception of the MBS session indicated by the indication identifier, for example, performs at least one of operations A to C:
A. If the RRC message includes the indication identifier, performing MAC partial resetting; or if the RRC message does not include the indication identifier, performing MAC resetting and/or releasing a default MAC cell group configuration (this operation is performed only when the default MAC cell group configuration is present).
B. Suspending all SRBs and DRBs and multicast MRBs except SRBO and a multicast MRB determined according to the indication identifier and received in the RRC inactive state.
C. Indicating, to a lower layer (e.g., a PDCP layer), PDCP suspension of all the DRBs and the multicast MRBs except the multicast MRB determined according to the indication identifier and received in the RRC inactive state. Upon receiving a PDCP suspension request from an upper layer (e.g., an RRC layer), a transmitting PDCP entity may set a state variable TX_NEXT used for indicating the COUNT value of a next PDCP SDU to be transmitted to an initial value and/or discard all stored PDCP PDUs. Upon receiving a PDCP suspension request from an upper layer (e.g., the RRC layer), a receiving PDCP entity may determine whether a duration timer t-Reordering configured by the upper layer to control awaiting PDCP SDU is running, and if the timer is running, the receiving PDCP entity stops and resets the timer and/or delivers all stored PDCP SDUs to the upper layer sequentially in ascending order of the COUNT values after performing header decompression thereon. The receiving PDCP entity may further set the value of a state variable RX_NEXT used for indicating the COUNT value of a next PDCP SDU expected to be received and the value of a state variable RX_DELIV used for indicating the COUNT value of the first PDCP SDU having not yet been delivered to the upper layer (e.g., a service data adaptation protocol (SDAP) entity) to initial values. COUNT consists of a hyper frame number (HFN) and a PDCP serial number (SN).

Optionally, the UE (or the RRC layer) indicates, to an upper layer (e.g., a NAS layer), a TMGI corresponding to the MBS session indicated by the indication identifier or a TMGI corresponding to the MRB indicated by the indication identifier or a TMGI indicated by the indication identifier.

Optionally, the UE (or the RRC layer) indicates, to a lower layer (e.g., a medium access control (MAC) layer), a G-RNTI or a G-CS-RNTI or an MRB identifier or a TMGI corresponding to the MBS session or the MRB to be received in the RRC inactive state. When the MAC layer receives the indication or is configured with the MBS session or the MRB to be received in the inactive state, the MAC layer may monitor the G-RNTI corresponding to the MBS session configured to be received in the inactive state.

Optionally, for the MBS session or the MRB configured to be received in the RRC inactive state, if the corresponding MBS session or G-RNTI or G-CS-RNTI or TMGI is configured to require a HARQ feedback, upon receiving an RRC release message indicating to enter the RRC inactive state, the UE (or the RRC layer) considers or indicates, to the lower layer (e.g., the MAC layer), that the HARQ feedback is not enabled or is not required or is disabled. Upon receiving the indication or when the UE is in the inactive state, the MAC layer does not perform a HARQ feedback (or does not instruct the physical layer to generate an acknowledgment for a received TB) for the MBS session (or the MRB) configured to be received in the inactive state. In other words, for the MBS session configured to require a HARQ feedback, the HARQ feedback is performed only when the UE is in the RRC connected state (or the UE is not in the RRC inactive state).

In the present disclosure, the MAC resetting (or a MAC resetting operation performed by a MAC entity when the UE is not configured with the MBS session receivable in the RRC inactive state) may include at least one of the following operations:
1. Stopping all timers except an MBS broadcast discontinuous reception (DRX) timer.
2. Setting the value of a new data indicator (NDI) of all uplink HARQ processes to 0.
3. Stopping an ongoing random access procedure.
4. Flushing soft buffers of all downlink processes except those used for MBS broadcast and downlink HARQ processes.
5. For each downlink HARQ process, considering that a next transport block to be received is transmitted for the first time.

In the present disclosure, the MAC partial resetting (or a MAC resetting or MAC partial resetting operation performed by a MAC entity when the UE is configured with the MBS session receivable in the RRC inactive state) may include at least one of the following operations:
1. Stopping all timers except the MBS broadcast discontinuous reception (DRX) timer and a DRX timer corresponding to the MBS session configured to be receivable in the RRC inactive state.
2. Flushing soft buffers of all downlink processes except the downlink HARQ process used for the MBS broadcast and the downlink HARQ process used for the MBS session receivable in the RRC inactive state.
3. Setting the value of the new data indicator (NDI) of all uplink HARQ processes to 0. Alternatively, the value of the new data indicator (NDI) of all uplink HARQ processes except the uplink HARQ process corresponding to the MBS session configured to be receivable in the RRC inactive state is set to 0.
4. For each downlink HARQ process except the downlink HARQ process corresponding to the MBS session configured to be receivable in the RRC inactive state, considering that a next transport block to be received is transmitted for the first time.
5. Flushing all uplink HARQ buffers.
6. Stopping an ongoing random access procedure.
7. Flushing the buffer of Msg3

It should be noted that if the UE performs more than one of A to C, embodiments achieved by changing the execution order also fall within the scope of protection of the present disclosure. The entity that performs step 401 and step 403 may be an RRC entity of the UE.

According to the above method, user equipment in the RRC inactive state is enabled to receive a multicast service, thereby conserving communication resources.

MBS multicast supports two hybrid automatic repeat request (HARQ) feedback modes. One of the HARQ feedback modes is ACK-NACK feedback. That is, HARQ-ACK information is transmitted on a physical uplink control channel (PUCCH) when UE correctly receives a transport block, and HARQ-NACK information is transmitted on a PUCCH when UE does not correctly receive a transport block. The other HARQ feedback mode is NACK-only feedback (nack-only). That is, HARQ-NACK information is transmitted on a PUCCH only when UE does not correctly receive a transport block. The base station configures, via an RRC reconfiguration message, whether a HARQ feedback is required for each MBS session or G-RNTI or G-CS-RNTI, and the configuration may be performed via a field harq-FeedbackEnablerMulticast associated with each G-RNTI. The field harq-FeedbackEnablerMulticast is used to indicate whether the UE should provide a HARQ feedback for the MBS multicast (or a received transport block scrambled by the G-RNTI). Further, the feedback mode may also be configured for the UE as NACK-only feedback or ACK-NACK feedback, and the configuration is performed via a harq-FeedbackOptionMulticast field. The harq-FeedbackOptionMulticast field indicates a feedback mode of a dynamically scheduled physical downlink shared channel (PDSCH) or semi-persistently scheduled (SPS) PDSCH MBS multicast.

The MRB or MBS session or TMGI or G-RNTI or G-CS-RNTI indicated by the indication identifier may be defined as an MRB or MBS session or TMGI or G-RNTI or G-CS-RNTI for which no HARQ feedback is configured, that is, an MRB or MBS session or TMGI or G-RNTI or G-CS-RNTI for which the field harq-FeedbackEnablerMulticast is not configured.

It may be further defined that, if the indication identifier indicates that the MRB or MBS session or TMGI or G-RNTI or G-CS-RNTI to be received in the inactive state is an MRB or MBS session or TMGI or G-RNTI or G-CS-RNTI for which a HARQ feedback is configured, after the UE enters the RRC inactive state, a HARQ feedback is not provided for the corresponding MRB or MBS or it is indicated that no HARQ feedback is required.

The RRC message carrying the indication identifier and the indication mode of the indication identifier will be described in detail below via different embodiments.

### Embodiment 1

A base station sends an RRC reconfiguration message RRCReconfiguration to UE to configure, for the UE in the RRC connected state, an MRB used for transmitting an MBS session, and includes, in an RRC release message RRCRelease sent to the UE, an indication identifier used for indicating the MBS session to be received after the UE enters the RRC inactive state.

The indication identifier field may be implemented in the following modes:
Mode 1: The indication identifier field includes an MRB identifier list (denoted as a ptmReceptionInInactiveList field). If an MRB identifier corresponding to an MBS session is included in the indication identifier, it is indicated that the UE needs to receive the MBS session or an MRB corresponding to the MRB identifier after entering the RRC inactive state.

Specifically, when the received RRC release message includes suspendConfig, if the RRC release message further includes the indication identifier, the UE performs at least one of the following operations:
A. Performing MAC partial resetting.
B. Suspending all SRBs and DRBs and multicast MRBs except SRBO and the multicast MRB indicated by the indication identifier.
C. Indicating, to a lower layer, PDCP suspension of all the DRBs and the multicast MRBs except the multicast MRB indicated by the indication identifier.

It should be noted that if the UE performs more than one of A to C, embodiments achieved by changing the execution order also fall within the scope of protection of the present disclosure.

If the RRC release message does not include the indication identifier, MAC resetting is performed and/or a default MAC cell group configuration is released (this operation is performed only when the default MAC cell group configuration is present).

In other words, when the RRC release message includes the indication identifier, the MRB indicated by the indication identifier is not suspended (or other RBs except SRBO and/or the MRB indicated by the indication identifier are suspended), that is, the indication identifier field indicates the MRB not to be suspended.

### [Variation of Mode 1]

The indication identifier includes an MRB identifier list. If an MRB identifier corresponding to an MBS session is not included in the indication identifier, it is indicated that the UE needs to receive the MBS session or an MRB corresponding to the MRB identifier after entering the RRC inactive state. In other words, upon receiving the indication to enter the RRC inactive state, the UE suspends the MRB included in the indication identifier or suspends other RBs except SRBO and/or an MRB not indicated by the indication identifier field). That is, the indication identifier indicates the MRB to be suspended.

Mode 2: The indication identifier includes a TMGI list. If a TMGI corresponding to an MBS session is included in the indication identifier, it is indicated that the UE needs to receive the MBS session or an MRB corresponding to the TMGI after entering the RRC inactive state.

In other words, upon receiving the indication to enter the RRC inactive state, the UE does not suspend the MRB corresponding to the TMGI included in the indication identifier (or suspends other RBs except SRBO and/or that not indicated by the indication identifier). That is, the indication identifier indicates the TMGI corresponding to the MRB not to be suspended.

Specifically, when the received RRC release message includes suspendConfig, if the RRC release message further includes the indication identifier, the UE performs at least one of the following operations:
A. Performing MAC partial resetting.
B. Suspending all SRBs and DRBs and multicast MRBs except SRBO and the multicast MRB corresponding to the TMGI indicated by the indication identifier.
C. Indicating, to a lower layer, PDCP suspension of all the DRBs and the multicast MRBs except the multicast MRB corresponding to the TMGI indicated by the indication identifier.

It should be noted that if the UE performs more than one of A to C, embodiments achieved by changing the execution order also fall within the scope of protection of the present disclosure.

If the RRC release message does not include the indication identifier, MAC resetting is performed and/or a default MAC cell group configuration is released (this operation is performed only when the default MAC cell group configuration is present).

### [Variation of Mode 2]

The indication identifier includes a TMGI list. If a TMGI corresponding to an MBS session is not included in the indication identifier, it is indicated that the UE needs to receive the MBS session or an MRB corresponding to the TMGI after entering the RRC inactive state. In other words, upon receiving the indication to enter the RRC inactive state, the UE suspends the MRB corresponding to the TMGI included in the indication identifier or suspends other RBs except SRBO and/or an MRB corresponding to a TMGI not indicated by the indication identifier). That is, the indication identifier indicates the TMGI corresponding to the MRB to be suspended.

Mode 3: The indication identifier includes a G-RNTI or G-CS-RNTI list. If a G-RNTI or G-CS-RNTI corresponding to an MBS session is included in the indication identifier, it is indicated that the UE needs to receive the MBS session or an MRB corresponding to the G-RNTI or G-CS-RNTI after entering the RRC inactive state. The G-CS-RNTI is used to scramble a semi-persistently scheduled (SPS) group common PDSCH of one or more MBS multicast services and activate/deactivate the SPS group common PDSCH.

In other words, upon receiving the indication to enter the RRC inactive state, the UE does not suspend the MRB corresponding to the G-RNTI or G-CS-RNTI included in the indication identifier (or suspends other RBs except SRBO and/or that not indicated by the indication identifier). That is, the indication identifier indicates the G-RNTI or G-CS-RNTI corresponding to the MRB not to be suspended.

Specifically, when the received RRC release message includes suspendConfig, if the RRC release message further includes the indication identifier, the UE performs at least one of the following operations:
A. Performing MAC partial resetting.
B. Suspending all SRBs and DRBs and multicast MRBs except SRBO and the multicast MRB corresponding to the G-RNTI or G-CS-RNTI indicated by the indication identifier.
C. Indicating, to a lower layer, PDCP suspension of all the DRBs and the multicast MRBs except the multicast MRB corresponding to the G-RNTI or G-CS-RNTI indicated by the indication identifier.

It should be noted that if the UE performs more than one of A to C, embodiments achieved by changing the execution order also fall within the scope of protection of the present disclosure.

If the RRC release message does not include the indication identifier, MAC resetting is performed and/or a default MAC cell group configuration is released (this operation is performed only when the default MAC cell group configuration is present).

### [Variation of Mode 3]

The indication identifier includes a G-RNTI or G-CS-RNTI list. If a G-RNTI or G-CS-RNTI corresponding to an MBS session is not included in the indication identifier, it is indicated that the UE needs to receive the MBS session or an MRB corresponding to the G-RNTI or G-CS-RNTI after entering the RRC inactive state. In other words, upon receiving the indication to enter the RRC inactive state, the UE suspends the MRB corresponding to the G-RNTI or G-CS-RNTI included in the indication identifier or suspends other RBs except SRBO and/or an MRB corresponding to a G-RNTI or G-CS-RNTI not indicated by the indication identifier). That is, the indication identifier indicates the G-RNTI or G-CS-RNTI corresponding to the MRB to be suspended.

Mode 4: The indication identifier includes a bitmap, and each bit in the bitmap corresponds to one MRB (or each bit in the bitmap corresponds to one MBS session or MRB that is not configured to require a HARQ feedback). For example, MRB identifiers sequentially correspond to the bits in the bitmap in ascending order. When the value of a corresponding bit in the bitmap is 1, it is indicated that the UE needs to receive the MBS session corresponding to the MRB identifier or the MRB corresponding to the MRB identifier after entering the RRC inactive state. When the value of a corresponding bit in the bitmap is 0, it is indicated that the UE does not receive the MBS session corresponding to the MRB identifier or the MRB corresponding to the MRB identifier after entering the RRC inactive state. In other words, upon receiving the indication to enter the RRC inactive state, the UE does not suspend the MRB corresponding to the bit in the bitmap of which the value is 1 (or suspends other RBs except SRBO and/or the MRB corresponding to the bit in the bitmap of which the value is 1). That is, the corresponding bit having the value of 1 in the bitmap indicates the MRB not to be suspended, and the corresponding bit having the value of 0 indicates the MRB to be suspended.

Specifically, when the received RRC release message includes suspendConfig, if the RRC release message further includes the bitmap, the UE performs at least one of the following operations:
A. Performing MAC partial resetting.
B. Suspending all SRBs and DRBs and multicast MRBs except SRBO and a multicast MRB corresponding to a bit having the value of 1 in the bitmap.
C. Indicating, to a lower layer, PDCP suspension of all the DRBs and the multicast MRBs except the multicast MRB corresponding to the bit having the value of 1 in the bitmap.

Compared with mode 1, mode 2, and mode 3, the bitmap mode can reduce signaling overhead.

### [Variation of Mode 4]

The indication identifier includes a bitmap, and each bit in the bitmap corresponds to one MRB (or each bit in the bitmap corresponds to one MBS session or MRB that is not configured to require a HARQ feedback). For example, MRB identifiers sequentially correspond to the bits in the bitmap in ascending order. When the value of a corresponding bit in the bitmap is 1, it is indicated that the UE does not need to receive the MBS session or the MRB corresponding to the MRB identifier after entering the RRC inactive state. In other words, upon receiving the indication to enter the RRC inactive state, the UE suspends the MRB corresponding to the bit of 1 in the bitmap. That is, the indication identifier indicates the MRB to be suspended.

Mode 5: The indication identifier is used to indicate that the UE still receives an MBS session or an MRB not configured to require a HARQ feedback after entering the RRC inactive state. In other words, when a received RRC message includes the indication identifier, the UE does not suspend the MRB corresponding to the MBS session that is not configured to require a HARQ feedback or the UE does not suspend the MRB that is not configured to require a HARQ feedback. That is, when the received RRC message includes the indication identifier, the UE suspends the MRB corresponding to the MBS session that is configured to require a HARQ feedback or the UE suspends the MRB that is configured to require a HARQ feedback.

Specifically, when the received RRC release message includes suspendConfig, if the RRC release message further includes the indication identifier used for indicating that the UE in the inactive state receives the MRB or the MBS session that is configured to require no HARQ feedback, at least one of the following operations is performed:
A. Performing MAC partial resetting.
B. Suspending all SRBs and DRBs and multicast MRBs except SRBO and an MRB corresponding to the MBS multicast not configured to require a HARQ feedback.
C. Indicating, to a lower layer, PDCP suspension of all the DRBs and the multicast MRBs except the multicast MRB corresponding to the MBS multicast not configured to require a HARQ feedback.

If the RRC release message does not include the indication identifier, MAC resetting is performed and/or a default MAC cell group configuration is released (this operation is performed only when the default MAC cell group configuration is present).

### Embodiment 2

A base station uses an RRC reconfiguration message to configure, for UE in the RRC connected state, an MRB used for transmitting an MBS session, and includes, in a corresponding configuration field of the MRB, an indication identifier used for indicating whether the UE receives the MRB after entering the RRC inactive state.

When the received RRC release message includes suspendConfig, if at least one MRB is configured with the indication identifier, the UE performs at least one of the following operations:
A. Performing MAC partial resetting.
B. Suspending all SRBs and DRBs and multicast MRBs except SRBO and the multicast MRB configured with the indication identifier.
C. Indicating, to a lower layer, PDCP suspension of all the DRBs and the multicast MRBs except the multicast MRB configured with the indication identifier.

It should be noted that if the UE performs more than one of A to C, embodiments achieved by changing the execution order also fall within the scope of protection of the present disclosure.

If none of the MRBs is configured with the indication identifier, MAC resetting is performed and/or a default MAC cell group configuration is released (this operation is performed only when the default MAC cell group configuration is present).

### [Variation of Embodiment 2]

The base station uses the RRC reconfiguration message to carry an indication identifier used for indicating a G-RNTI or G-CS-RNTI or TMGI corresponding to an MBS session or an MRB to be received by the UE in the RRC inactive state. Correspondingly, the MRB received in the RRC inactive state described in Embodiment 2 is the MRB corresponding to the G-RNTI or G-CS-RNTI or TMGI corresponding to the MBS session or the MRB indicated by the indication identifier.

### Embodiment 3

A base station performs configuration for UE via an RRCRelease message, and indicates an MRB used for transmitting an MBS session for the UE in the RRC connected state.

In order to receive MBS multicast (for example, a paging message is received, and includes TMGIs corresponding to one or more MBS sessions that the UE has joined), the UE in the RRC inactive state sends, to a base station, an RRC resume request message RRCResumeRequest used for requesting resumption of a suspended RRC connection or used for performing a RAN-based notification area (RNA) update. The message includes a cause field ResumeCause having a value corresponding to TMGIs of one or more MBS sessions that the UE wants to receive or used to indicate that the UE needs to receive the MBS session and therefore triggers transmission of an RRC connection resumption request.

The UE receives, from the base station, an RRC release message including the suspendConfig field, and the message includes configuration information indicating an MRB of an MBS session to be received by the UE in the inactive state. The UE configures the corresponding MRB according to the configuration information and receives the corresponding MBS session.

For an MRB configured for both PTM and PTP transmission, it may be specified that the PTP transmission is suspended when the UE is in the RRC inactive state. That is, the UE receives the MBS session only from the PTM.

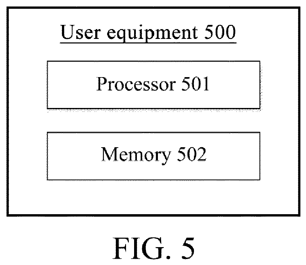

FIG. 5 is a simplified structural block diagram of user equipment (UE) according to the present invention. As shown in FIG. 5, the user equipment (UE) 500 includes a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), or other memories, etc. The memory 502 has program instructions stored thereon. The instructions, when run by the processor 501, can perform the above method performed by user equipment described in detail in the present invention.

Additionally, the computer-executable instructions or program running on the device according to the present invention may be a program that enables the computer to implement the functions of the embodiments of the present invention by controlling the central processing unit (CPU). The program or information processed by the program may be temporarily stored in a volatile memory (for example, a random access memory (RAM)), a hard disk drive (HDD), a non-volatile memory (for example, a flash memory), or other memory systems.

The computer-executable instructions or program for implementing the functions of the embodiments of the present invention may be recorded on a computer-readable storage medium. The corresponding functions may be achieved by reading programs recorded on the recording medium and executing the programs by a computer system. The phrase "computer system" herein may be a computer system embedded in the device, which may include operating systems or hardware (e.g., peripherals). The "computer-readable storage medium" may be a semiconductor recording medium, an optical recording medium, a magnetic recording medium, a short-time dynamic memory program recording medium, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A paging message processing method performed by user equipment not in an RRC connected state, the user equipment being capable of receiving an MBS multicast session in an RRC inactive state, comprising:
monitoring a paging message, the paging message comprising at least one temporary mobile group identity (TMGI) identifying an MBS multicast session; and
if the user equipment is in the RRC inactive state, when no MBS multicast session not configured to be received in the RRC inactive state is present among MBS multicast sessions that the user equipment has joined among the MBS multicast sessions indicated by the TMGIs in the detected paging message, skipping performing an RRC connection resumption operation.

2. The method according to claim 1, further comprising:
for each TMGI in the detected paging message, in the case that the MBS multicast session indicated by the TMGI is not configured to be received in the RRC inactive state, forwarding, by an RRC layer of the user equipment, the TMGI to an upper layer of the RRC layer.

3. The method according to claim 1, further comprising:
if the user equipment is in an RRC idle state, for each TMGI in the detected paging message, forwarding, by an RRC layer of the user equipment, the TMGI to an upper layer of the RRC layer to set up an RRC connection.

4. The method according to claim 1, further comprising:
if the user equipment is in the RRC inactive state, for each TMGI in the detected paging message, in the case that the following first condition is satisfied, resuming an RRC connection on the basis of RRC connection context information stored by the user equipment:
an MBS multicast session that the user equipment has joined is present among the MBS multicast sessions indicated by the TMGIs, and the MBS multicast session is not configured to be received in the RRC inactive state; and
none of user equipment identities in the paging message matches a user equipment identity specified by an upper layer of an RRC layer of the user equipment.

5. The method according to claim 4, wherein the first condition further comprises:
none of user equipment identities in the paging message matches a specific identity stored in the UE, the specific identifier is carried in an RRC release message and transmitted to the user equipment, and the RRC release message is transmitted to the user equipment by a base station to instruct the user equipment to release the RRC connection.

6. The method according to claim 4, further comprising:
if the user equipment is in the RRC inactive state, for each TMGI in the detected paging message, in the case that the following second condition is satisfied, forwarding, by the RRC layer, the TMGI to the upper layer of the RRC layer:
the MBS multicast session indicated by the TMGI is an MBS multicast session that the user equipment has joined, and the MBS multicast session is not configured to be received in the RRC inactive state.

7. The method according to claim 1, further comprising:
if the user equipment is in an inactive state, for each TMGI in the detected paging message, if the MBS multicast session indicated by the TMGI is a session that the user equipment has joined, and the MBS multicast session is configured to be received in the RRC inactive state, instructing, by an RRC layer of the user equipment, a lower layer of the RRC layer to receive the corresponding MBS multicast session.

8. The method according to claim 1, further comprising:
monitoring an indication message indicating stopping of an MBS session from a base station; and
in response to reception of the indication message, stopping receiving the MBS multicast session.

9. The method according to claim 1, wherein the MBS multicast sessions indicated by the TMGIs and joined by the user equipment are all configured to be receivable in the RRC inactive state, and
before the monitoring a paging message, the method further comprises:
receiving a paging early indication (PEI) from a base station, the PEI comprising paging subgroup information of paged user equipment;
in the case that the paging subgroup information does not comprise information indicating a paging subgroup to which the user equipment belongs, skipping monitoring of the paging message and a paging occasion indicated by the PEI; and
in the case that the paging subgroup information comprises the information indicating the paging subgroup to which the user equipment belongs, monitoring the paging message and the paging occasion indicated by the PEI.

10. User equipment, comprising:
a processor; and
a memory, having instructions stored therein,
wherein the instructions, when run by the processor, perform the method according to any one of claims 1 to 9.
